# EUROPEAN PATENT APPLICATION

(11) **EP 2 474 934 A1**
(43) Date of publication of application: **11.07.2012**
(21) Application number: 10813451.1
(22) Date of filing: 07.06.2010
(51) Int. Cl.: G06F 21/22, G06F 21/20

(54) **UNAUTHORIZED PROCESS DETECTION METHOD AND UNAUTHORIZED PROCESS DETECTION SYSTEM**

(30) Priority: 01.09.2009 JP 2009201794
(71) Applicant: Hitachi, Ltd., Chiyoda-ku Tokyo 100-8280 (JP)
(72) Inventor: KITO, Tetsuro, Kawasaki-shi Kanagawa 215-0013 (JP); KAWAGUCHI, Nobutaka, Kawasaki-shi Kanagawa 215-0013 (JP); OKOCHI, Kazuya, Kawasaki-shi Kanagawa 215-0013 (JP); NAKAKOJI, Hirofumi, Kawasaki-shi Kanagawa 215-0013 (JP); SHIGEMOTO, Tomohiro, Kawasaki-shi Kanagawa 215-0013 (JP); KAWAGUCHI, Tatsunoshin, Kawasaki-shi Kanagawa 212-8567 (JP)
(74) Representative: Calderbank, Thomas Roger
(86) International application number: PCT/JP2010/003782
(87) International publication number: WO 2011/027496

(57) **Abstract**

Provided is a system whereby information on activities obtained by way of monitoring system access to input and output devices and storage devices in a terminal as well as information on activities executed by way of a terminal and obtained by way of monitoring communications through a network are associated with processes in the terminal that generated the activities, and if the activities are predetermined activities executed by the same or related processes, the system detects that unauthorized processes are running on the terminal.

## Description

### Incorporation by reference

This application claims the priority of Japanese Patent Application No. 2009-201794 applied on Sep. 1, 2009 and incorporates it in this application by the reference of the contents.

### Technical Field

The present invention relates to a method and a system for detecting a malicious process such as a computer virus that makes unauthorized activity via a network.

### Background Art

For one of countermeasures against unauthorized intrusion via a network, a network intrusion detection system can be mentioned. For technique related to the network intrusion detection system, technique disclosed in a patent document 1 can be mentioned. In the patent document 1, an intrusion detection system monitors communication via a network, analyzes a flowing packet, and judges whether unauthorized intrusion is made or not. In addition, when the intrusion detection system judges that unauthorized intrusion is made, it takes measures such as the cutoff of communication.

For technique that applies the network intrusion detection system for detecting that a terminal infected with a computer virus exists inside a network, techniques disclosed in a patent document 2 and a non-patent document 1 can be mentioned. In the technique disclosed in the patent document 2, the detection of abnormal communication is executed based upon a monitoring result of communication via a network. When abnormal communication is detected, a terminal is notified of a characteristic pattern of the abnormal communication and the terminal determines whether abnormal communication is made in the past or not by comparing the characteristic pattern with a characteristic pattern of communication by the terminal itself. Further, in the technique disclosed in the non-patent document 1, a terminal that performs suspicious activity is detected by monitoring communication via a network and associating plural network activities by one terminal.

### Prior Art Document

### Patent Document

Patent document 1: JP-A No. 2002-73433
Patent document 2: JP-A No. 2008-278272

### Non-patent Document

Non-patent document 1: "BotHunter: Detecting Malware Infection Through IDS-Driven Dialog Correlation", Guofei Gu, Phillip Porras, Vinod Yegneswaran, Marth Fong and Wenke Lee, Proceedings of 16th USENIX Security Symposium, pp. 167-182, 2007.

### Summary of the Invention

### Problem to be Solved by the Invention

Recently, a type of a computer virus called Bot is posing problems. Bot operates in a terminal (a computer) of a user and performs unauthorized activity corresponding to an instruction of an attacker at a remote site via a network. For unauthorized activities of Bot, attack on the vulnerability of software, denial of service attack, the transmission of spam mail and the outside transmission of confidential information in a terminal infected with Bot can be mentioned.

Bot does not necessarily attack the vulnerability of software unlike a conventional type computer virus such as worm. The techniques disclosed in the patent document 1 and the patent document 2 have a problem that attack including abnormal data on the vulnerability of software can be detected by the techniques while unauthorized activities such as the transmission of spam mail and the outside transmission of confidential information cannot be detected. This reason is that for example, the transmission of spam mail is not the transmission of such data as makes the operation of the software out of order but the transmission according to the same procedure as normal mail.

Besides, the technique disclosed in the non-patent document 1 has a problem that when plural network activities (the transmission of a mail and chat communication by Internet relay chat (IRC)) are normally performed without depending upon an unauthorized process and others, a normal terminal is wrongly detected as a suspicious terminal. As described above, according to the detection of abnormality using the conventional type intrusion detection system, it is difficult to discriminate an unauthorized activity according to a normal procedure from a normal activity and detect the unauthorized activity.

### Means for Solving the Problem

As described above, since it is difficult to detect an unauthorized process by monitoring only activities in a network, the activity of a process in a terminal or the activity of a process in a network or both are monitored, the activity and an identifier of the process are associated, the activity is unified for the same process or every group of associated processes, and it is determined whether an unauthorized activity is performed or not in the present invention.

In this case, the association of two processes means that a process common to both exists when processes (parent processes) that generated the respective processes are recursively pursued.

Concrete embodiments of the present invention are as follows. A terminal, a communication monitoring apparatus and an unauthorized process determination apparatus are connected to an internal network. In the terminal, memory access and access to a storage device and an input device (hereinafter called system access) are monitored, an activity acquired by the monitoring of the system access and a process in the terminal are associated, and the unauthorized process determination apparatus is notified of them. Further, in the communication monitoring apparatus, communication executed by the terminal is monitored, an activity acquired by the monitoring of communication and the process in the terminal are associated, and the unauthorized process determination apparatus is notified of them. In the unauthorized process determination apparatus, referring to the notified activity, it is determined, depending upon whether or not the activity that meets predetermined conditions is executed by the same process or its associated process, that the unauthorized process is going on in the terminal.

### Effect of the Invention

According to the present invention, the activity of an unauthorized process the detection of which is difficult by only monitoring communication performed via a network can be detected.

### Brief Description of the Drawings

[Fig. 1] Fig. 1 shows an example of the configuration of an unauthorized process detection system;
[Fig. 2] Fig. 2 shows an example of the hardware configuration of each apparatus that configures the unauthorized process detection system;
[Fig. 3] Fig. 3 shows an example of the software configuration of each apparatus that configures the unauthorized process detection system;
[Fig. 4] Fig. 4 shows an example of the configuration of a process information database;
[Fig. 5] Fig. 5 shows an example of the configuration of a system monitoring result database;
[Fig. 6] Fig. 6 shows an example of the configuration of a communication monitoring result database;
[Fig. 7] Fig. 7 shows an example of the configuration of determination policy;
[Fig. 8] Fig. 8 shows one example of a process flow of a system monitoring unit;
[Fig. 9] Fig. 9 shows one example of a process flow of a communication monitoring unit;
[Fig. 10] Fig. 10 shows one example of a process flow of a process information association unit;
[Fig. 11] Fig. 11 shows one example of a process flow of an unauthorized process determination unit; and
[Fig. 12] Fig. 12 shows an example of the software configuration of a terminal in a second embodiment.

### Mode for Carrying Out the Invention

Referring to the drawings, embodiments of the present invention will be described below. The following description shows the embodiments of the present invention and does not limit the configuration, the functions and others of the present invention.

### First Embodiment

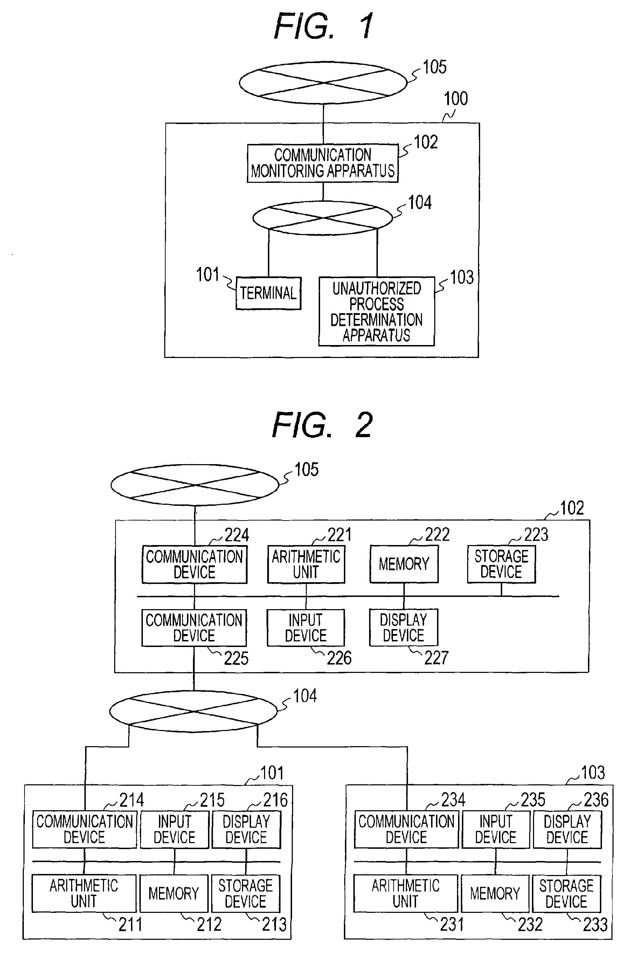

Fig. 1 shows an example of the configuration of an unauthorized process detection system 100 in this embodiment. The unauthorized process detection system 100 is provided with a terminal 101, a communication monitoring apparatus 102 and an unauthorized process determination apparatus 103, and these are connected via an internal network 104. A terminal, a communication device and others respectively not shown are also connected to the internal network 104. The communication monitoring apparatus 102 is also connected to an external network 105 such as the Internet.

As shown in Fig. 1, the communication monitoring apparatus 102 is installed to enable communication between the internal network 104 and the external network 105 via the communication monitoring apparatus 102. However, a position where the communication monitoring apparatus 102 is installed is not limited to a position shown in Fig. 1 and the communication monitoring apparatus has only to be installed in a position where communication between the internal network 104 and the external network 105 can be monitored.

Fig. 2 shows an example of the hardware configuration of each apparatus 101, 102, 103 of the unauthorized process detection system. Hardware that configures each apparatus has the substantially similar device configuration and each operation is determined by software executed in each arithmetic unit.

The terminal 101 is an information processing unit and is a terminal owned by a user such as PC. The terminal 101 is provided with an arithmetic unit 211, a memory 212, a storage device 213 such as a hard disk, a communication device 214 such as a network card, an input device 215 such as a keyboard and a mouse and a display device 216 such as a liquid crystal display (LCD). The arithmetic unit 211 executes a program stored in the storage device 213 and controls each device. The storage device 213 stores programs executed by the arithmetic unit 211, data and others used by the arithmetic unit 211. The communication device 214 receives data from another apparatus via the network 104, transmits the data to the arithmetic unit 211, and transmits data generated by the arithmetic unit 211 to another apparatus via the network 104. The arithmetic unit 211 controls the input device 215 and the display device 216, inputs data from the input device 215, and outputs the data to the display device 216. Programs are stored in the storage device 213, a program is loaded from the storage device 213 onto the memory 212, and is executed by the arithmetic unit 211. The terminal 101 loads the program from the storage device 213 and executes it. For another example, however, the terminal may also load a program from an optical record medium such as CD and DVD, a magneto-optical record medium such as MO, a tape medium, a magnetic record medium or a record medium such as a semiconductor memory. Further, for yet another example, the terminal may also load these programs from another apparatus via a communication medium. The communication medium denotes a network or a digital signal or a carrier wave transmitted on the network.

The communication monitoring apparatus 2 is provided with an arithmetic unit 221, a memory 222, a storage device 223 such as a hard disk, communication devices 224, 225 such as a network card, an input device 226 such as a keyboard and a mouse and a display device 227 such as LCD. The unauthorized process determination apparatus 103 is provided with an arithmetic unit 231, a memory 232, a storage device 233 such as a hard disk, a communication device 234 such as a network card, an input device 235 such as a keyboard and a mouse and a display device 236 such as LCD. The operation as hardware of the communication monitoring apparatus 102 and the unauthorized process determination apparatus 103 is similar to the operation of the terminal 101.

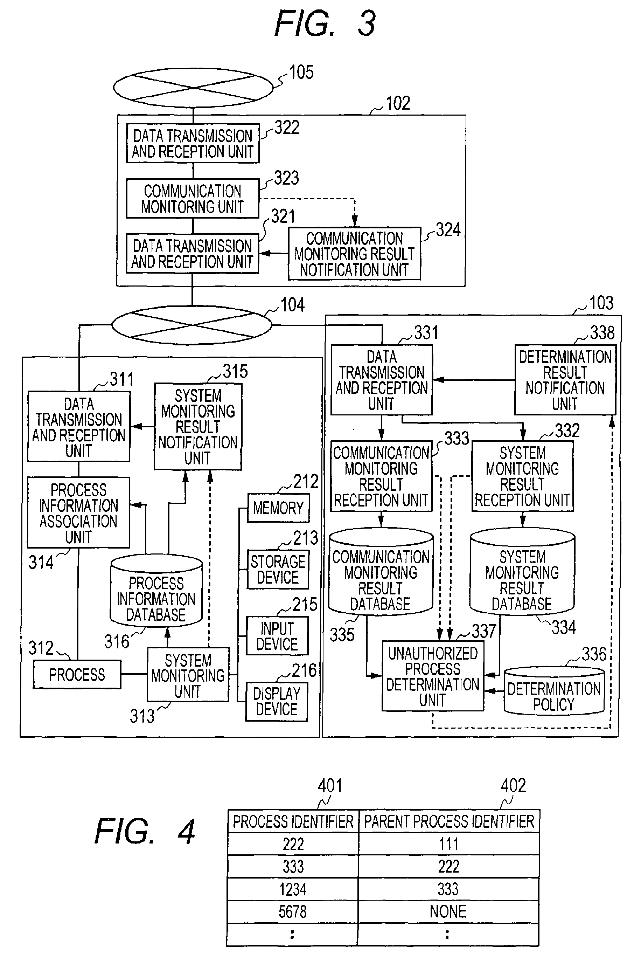

Fig. 3 shows an example of the software configuration of the terminal 101, the communication monitoring apparatus 102 and the unauthorized process determination apparatus 103 that respectively configure the unauthorized process detection system 100.

In this embodiment, the unauthorized process detection system 100 detects an unauthorized process operated inside the terminal 101. The terminal 101 is provided with a data transmission and reception unit 311 that transmits/receives information to/from the internal network 104, a process 312 operated inside, a system monitoring unit 313 that monitors access by the process 312 to the storage device 213, the input device 215 and others, a process information association unit 314 that associates communication with the internal network 4 via the data transmission and reception unit 311 and the process, a system monitoring result notification unit 315 that transmits a result of monitoring by the system monitoring unit 313 to the unauthorized process determination apparatus 103, and a process information database 316 that stores the information showing parent-child relationship of which process generated the process in the terminal 101.

The process 312 is an instance in executing an arbitrary program stored in the storage device 213 and others in the terminal 101 and executes the transmission/reception of information to/from the internal network 4 via the data transmission and reception unit 311, access to the memory 212, the input device 215 and others or both. Access by the process 312 to a storage device and an input device such as the memory 212 and the input device 215 is called system access and the transmission/reception of information to/from the internal network 4 is called communication. An object of monitoring in this embodiment is the system access and the communication.

Fig. 4 shows one example of the process information database 316. The process information database 316 is configured by a process identifier 401 and a parent process identifier 402. The process identifier 401 is an identifier for specifying the process in the terminal 101. The parent process identifier 402 is an identifier of a process (a parent process) that generated the process represented by the process identifier 401.

Referring to Fig. 3 again, the description will be made. The communication monitoring apparatus 102 is provided with a data transmission and reception unit 321 that transmits/receives information to/from the internal network 104, a data transmission and reception unit 322 that transmits/receives information to/from the external network 105, a communication monitoring unit 323 that monitors information communicated between the internal network 104 and the external network 105 and a communication monitoring result notification unit 324 that transmits a result of monitoring by the communication monitoring unit 323 to the unauthorized process determination apparatus 103.

The unauthorized process determination apparatus 103 is provided with a data transmission and reception unit 331 that transmits/receives information to/from the internal network 104, a system monitoring result reception unit 332 that receives a system monitoring result notified from the system monitoring result notification unit 315 of the terminal 101 via the data transmission and reception unit 331, a communication monitoring result reception unit 333 that receives a communication monitoring result notified from the communication monitoring result notification unit 324 of the communication monitoring apparatus 102 via the data transmission and reception unit 331, a system monitoring result database 334 that accumulates received system monitoring results, a communication monitoring result database 335 that accumulates received communication monitoring results, determination policy 336 that defines unauthorized activities (hereinafter, unauthorized "activity" is used for a term as which a computer virus and others are supposed. However, the unauthorized activity means unauthorized "processing" or "operation" accompanied with the execution of an unauthorized process. Similarly, "processing" or "operation" accompanied with the execution of a normal process is also "activity"), an unauthorized process determination unit 337 that determines whether the process operated in the terminal 101 is an unauthorized process or not by comparing the system monitoring result database 334, the communication monitoring result database 335 with the contents of the determination policy 336, and a determination result notification unit 338 that notifies of warning based upon a result of determination acquired by the unauthorized process determination unit 337.

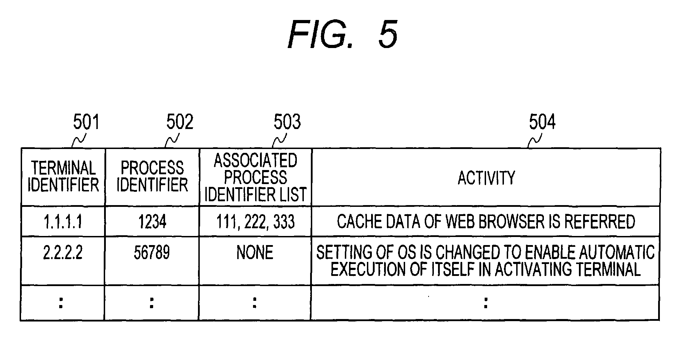

Fig. 5 shows one example of the system monitoring result database 334. The system monitoring result database 334 is configured by a terminal identifier 501, a process identifier 502, an associated process identifier list 503 and the activity contents 504. The terminal identifier 501 is an identifier of a terminal that performs an activity detected by the system monitoring unit 313. The process identifier 502 is an identifier of the process in the terminal 101 which performs an activity detected by the system monitoring unit 313 and which is specified by the terminal identifier 501. The associated process identifier list 503 is a list of process identifiers acquired by recursively searching a parent process based upon the process identifier 502 such as searching an identifier of a process (a parent process) that generated a process specified in the process identifier 502, then an identifier of a process that generated the parent process and so on. When "the associated process identifier list" without a reference numeral is referred to below, the list denotes a list of process identifiers acquired by recursively searching a parent process of a certain process. The activity contents 504 are information showing the activity contents detected by the system monitoring unit 313.

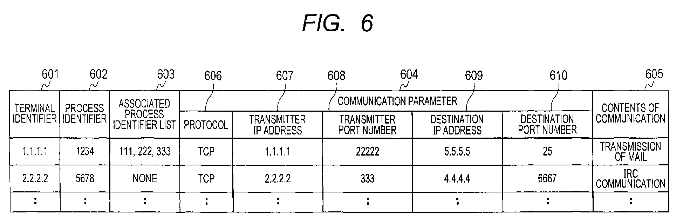

Fig. 6 shows one example of the communication monitoring result database 335. The communication monitoring result database 335 is configured by a terminal identifier 601, a process identifier 602, an associated process identifier list 603, a communication parameter 604 and the contents of communication 605. The terminal identifier 601 is an identifier of the terminal 101 the activity of which is detected by the communication monitoring unit 323. The process identifier 602 is an identifier of the process in the terminal 101 the activity of which is detected by the communication monitoring unit 323 and which is specified with the terminal identifier 601. The associated process identifier list 603 is a list of process identifiers acquired by recursively searching a parent process based upon the process identifier 602 such as searching an identifier of a process (a parent process) that generated the process specified with the process identifier 602, then an identifier of a process that generated the parent process and so on. The communication parameter 604 is a parameter of communication detected by the communication monitoring unit 323 and is configured by a protocol 606, a transmitter Internet Protocol (IP) address 607, a transmitter port number 608, a destination IP address 609 and a destination port number 610. The contents of communication 605 are the contents of communication (a communication type) detected by the communication monitoring unit 323.

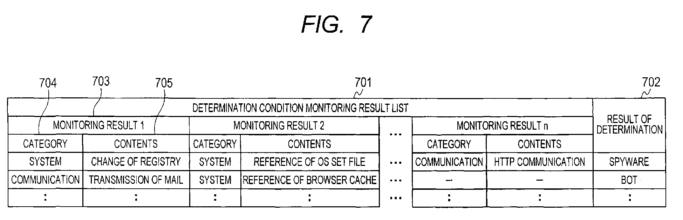

Fig. 7 shows one example of the determination policy 336. The determination policy 336 is configured by a determination condition monitoring result list 701 and a result of determination 702. The determination condition monitoring result list 701 is a list of results of monitoring as a condition to be met to determine that the corresponding activity is the activity of an unauthorized process in the unauthorized process determination unit 337. The determination condition monitoring result list 701 is configured by one or plural monitoring results 703 and each monitoring result 703 is configured by a category 704 and contents 705. The category 704 denotes that the monitoring result 703 is detected by the system monitoring unit 313 or is detected by the communication monitoring unit 323 and the contents 705 denote the activity contents detected by the system monitoring unit 313 or the communication monitoring unit 323. The result of determination 702 is a result of determination acquired from the unauthorized process determination unit 337 when the monitoring results included in the determination condition monitoring result list 701 are all met.

The registration of information in the determination policy 336 is not defined in this embodiment. For an example of the registration of information, a method in which a network manager manually registers and a method of regularly accessing to an external web site and downloading information to be registered as in the existing antivirus software can be given.

The operation of the unauthorized process detection system 100 will be described below. The process 312 in the terminal 101 reads data stored in the memory 212 and the storage device 213, writes data there, and accesses the input device 215 and the display device 216 (these are collectively called system access). The system monitoring unit 313 monitors the system access in the terminal 101 by the process 312 and checks whether a process that performs a suspicious activity exists or not. In this embodiment, processes to be monitored by the system monitoring unit 313 are all processes operated in the terminal 101. However, limitation such as only specific processes are monitored by the system monitoring unit 313 and only processes activated by specific users are monitored by the system monitoring unit may also be added.

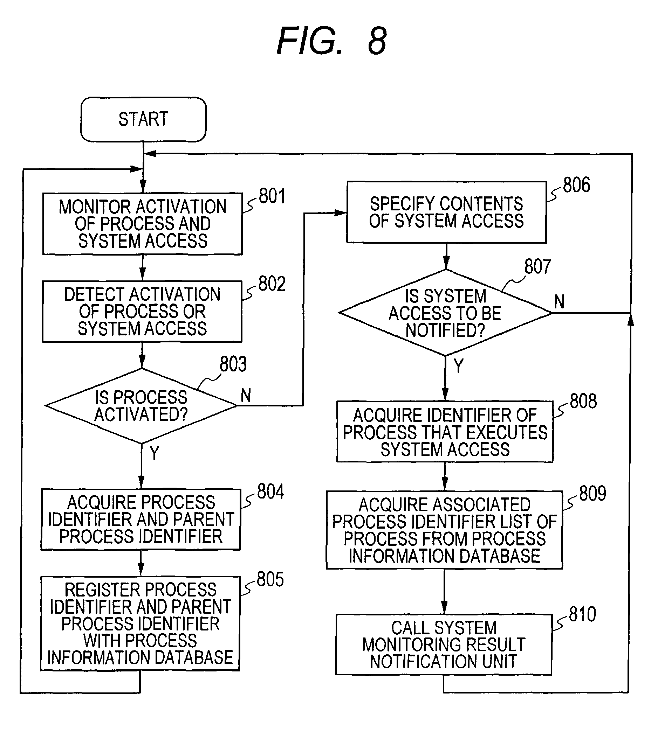

Fig. 8 shows one example of a flowchart showing processing by the system monitoring unit 313. When the system monitoring unit 313 is activated, it monitors the activation of a process and system access (a step 801). When the system monitoring unit detects the activation of a process and system access by an arbitrary process (a step 802), it checks whether the activation of the process is detected or not (a step 803).

When the activation of the process is detected, an identifier of the process the activation of which is detected and an identifier of a process (a parent process) that generated the process are acquired (a step 804). The identifier of the process and the identifier of the parent process are acquired utilizing a function of an operating system (OS) or are acquired by reading data in a specific location of the memory 212 in the terminal 101.

The acquired identifiers of the process and the parent process are registered in the process information database 316 (a step 805) and control is returned to the step 801 so as to continue monitoring. When a process (a normal process) which is clearly not unauthorized exists among processes in the terminal 101, the normal process may also be filtered to prevent a process identifier or a parent process identifier which coincides with an identifier of the normal process from being registered in the process information database 316 in registering in the process information database 316.

When the detection of the system access is verified in the step 803, the contents of the system access are specified (a step 806) and it is judged whether or not the unauthorized process determination unit 337 is to be notified of the system access (a step 807).

The monitoring of system access and the specification of the contents include the detection of access to a specific folder by the monitoring of file access in the terminal 101 described in "Information Leakage Prevention Function of host based for P2P File Exchange Environment" by Masaaki Matsuoka, Takahiro Matsuki, Masatoshi Terada, Tetsuro Kito and Hirofumi Nakakoji in a research report Vol. 2008 No. 71 pp. 115-122, 2008 by Computer Security Group of Information Processing Society of Japan or the detection of execution by the same process in the combination defined beforehand of calls for a feature by the monitoring of a call for a feature of OS by an arbitrary process described in "A Study on Detecting Information Leak Virus by Activity Monitoring" by Tetsuro Kito, Takahiro Matsuki, Masaaki Matsuoka, Hirofumi Nakakoji and Masatoshi Terada in a research report Vol. 2008 No. 71 pp. 317-322, 2008 by Computer Security Group of Information Processing Society of Japan for example.

When it is judged in the step 807 that the system access is not required to be notified, control is returned to the step 801 to continue the monitoring of system access. When it is judged that the system access is to be notified, an identifier of the process which executed the system access is acquired (a step 808) and an associated process identifier list of the process the identifier of which is acquired is acquired from the process information database 316 (a step 809). The process which executed the system access is specified by reading data in a specific location in the memory 212 of the terminal 101. Depending upon the OS, such reading of data in a memory may also be provided as a function. The system monitoring result notification unit 315 is called (a step 810), the unauthorized process determination apparatus 103 is notified of system monitoring results (the identifier of the process (a result of the step 808), the associated process identifier list (a result of the step 809) and the activity contents (a result of the step 806)), and control is returned to the step 801 to continue the monitoring of system access.

The process 312 communicates via the data transmission and reception unit 311 in addition to system access. The process information association unit 314 in the terminal 101 monitors the communication by the process 312 via the data transmission and reception unit 311 and associates the process with communication parameters. The process information association unit 314 is software provided with a function for associating the information of a process with communication parameters and provides information that enables specifying what the process that executed the communication is when the communication monitoring unit 323 of the communication monitoring apparatus 102 detects the communication.

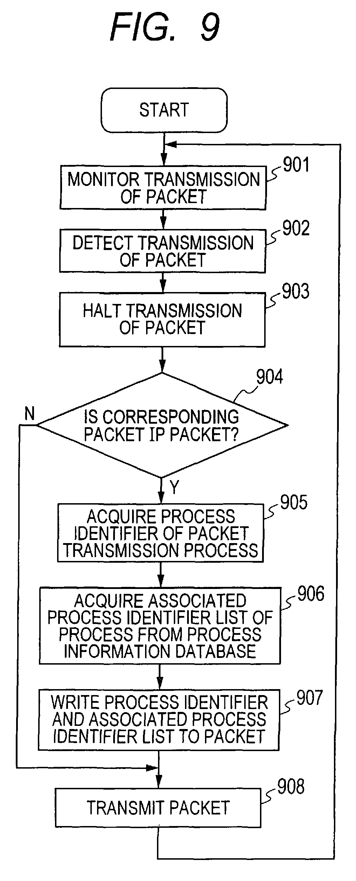

Fig. 9 shows one example of a flowchart showing processing by the process information association unit 314. The process information association unit 314 monitors the transmission of a packet via the data transmission and reception unit 311 (a step 901). When the process information association unit detects the transmission of a packet (a step 902), it temporarily halts the transmission of the packet (a step 903) and checks whether the packet to be transmitted is an IP packet or not (a step 904). When the packet to be transmitted is not an IP packet, the packet is transmitted via the data transmission and reception unit 311 (a step 908) and control is returned to the step 901 to continue the monitoring.

When the packet to be transmitted is an IP packet, the process information association unit acquires an identifier of the process that tries to transmit the packet (a step 905) and acquires an associated process identifier list of the process, the identifier of which is acquired, from the process information database 316 (a step 906). The process that tries to transmit the packet is acquired utilizing the function of the OS or is specified by reading data in a specific location in the memory 212 of the terminal 101. The process information association unit writes the acquired identifier of the process and the acquired associated process identifier list to the packet (a step 907), transmits the packet to which the identifier of the process and the associated process identifier list are written (the step 908), and control is returned to the step 901 to continue the monitoring.

In the step 907, the process identifier and others are written to an option field of the IP packet as described in "Information Sharing Architecture for P2P File Exchange Environment" by Masatoshi Terada, Tetsuro Kito, Hirofumi Nakakoji, Takahiro Matsuki and Masaaki Matsuoka in a research report Vol. 2008 No. 21 pp. 243-248, 2008 by Computer Security Group of Information Processing Society of Japan, for example.

When communication is detected by the communication monitoring unit 323, the process that executed the communication can be specified by only referring to a specific part (for example, an option field) of the packet without relying on other information by writing process information to the IP packet.

For another example of associating communication and a process in the process information association unit 314, the association of communication parameters and a process identifier is recorded every time communication is executed and the communication monitoring apparatus may also be notified of the association at predetermined timing.

When the process 312 in the terminal 101 transmits a packet to the external network 105, the packet passes the communication monitoring apparatus 102. The communication monitoring unit 323 in the communication monitoring apparatus 102 monitors the packet passing the communication monitoring apparatus 102 and specifies what type communication by the passing packet is.

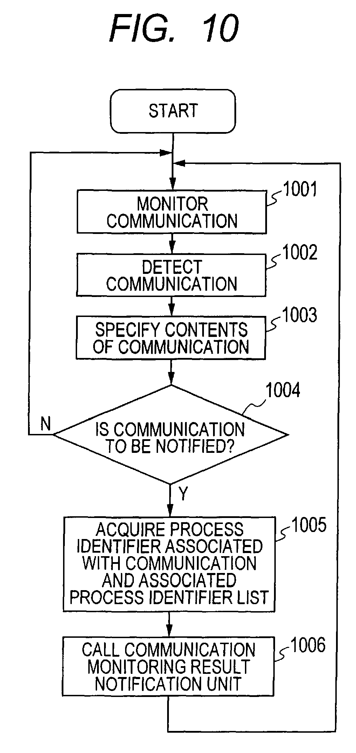

Fig. 10 shows one example of a flowchart showing processing by the communication monitoring unit 323. The communication monitoring unit 323 monitors communication passing in the communication monitoring apparatus 102 (a step 1001). When the communication monitoring unit detects communication (a step 1002), it specifies the activity contents of the communication (a step 1003) and judges whether the activity is to be notified or not (a step 1004).

The activity contents are specified using the method in the existing intrusion detection system described in the patent document 1 or based upon an IP address and a port number of the passing packet for example.

When it is judged in the step 1004 that the activity is not required to be notified, control is returned to the step 1001 to continue monitoring. When it is judged in the step 1004 that the activity is to be notified, information associated with the process that executed the communication is acquired (a step 1005).

The acquisition of information associated with the process in the step 1005, that is, the acquisition of a process identifier and an associated process identifier list varies depending upon a method of associating communication and a process in the process association unit 314 in the terminal 101. As described above, when the process identifier and the associated process identifier list are written to the IP packet in the process association unit 314, the process identifier and the associated process identifier list are acquired by extracting the information written to the packet.

The communication monitoring result notification unit 324 is called (a step 1006), the unauthorized process determination apparatus 103 is notified of a communication monitoring result (the identifier, the associated process identifier list and the communication contents respectively of the process that executed communication), and control is returned to the step 1001 to continue the monitoring of communication.

Information of the activity detected in the system monitoring unit 313 in the terminal 101 and in the communication monitoring unit 323 in the communication monitoring apparatus 102 is transmitted to the unauthorized process determination apparatus 103 by the system monitoring result notification unit 315 and the communication monitoring result notification unit 324.
The system monitoring result reception unit 332 receives the system monitoring result transmitted from the terminal 101, records the received system monitoring result in the system monitoring result database 334, and calls the unauthorized process determination unit 337 using the system monitoring result for a calling parameter. The communication monitoring result reception unit 333 receives the communication monitoring result transmitted from the communication monitoring apparatus 102, records the received communication monitoring result in the communication monitoring result database 335, and calls the unauthorized process determination unit 337 using the communication monitoring result for a calling parameter. The unauthorized process determination unit 337 determines whether the unauthorized process is going on in the terminal 101 or not based upon the monitoring result given as the parameter and the information respectively stored in the system monitoring result database 334, the communication monitoring result database 335 and the determination policy 336.

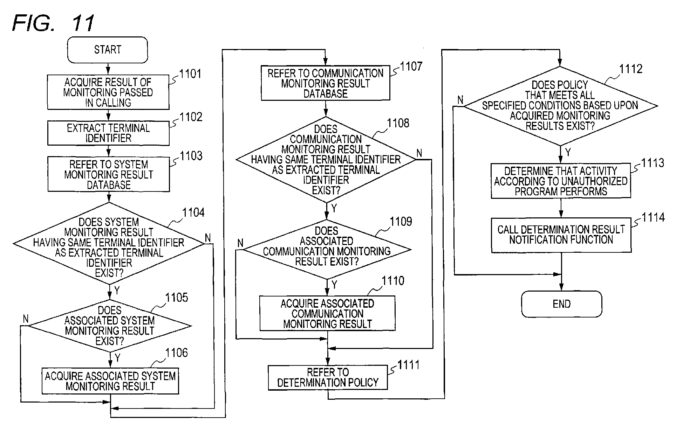

Fig. 11 shows one example of a flowchart showing processing by the unauthorized process determination unit 337. The unauthorized process determination unit 337 acquires the monitoring result passed as the parameter (a step 1101). The monitoring result passed as the parameter is one of the system monitoring result and the communication monitoring result. However, they are together treated as a monitoring result below. A terminal identifier is extracted from the acquired monitoring result (a step 1102). The system monitoring result database 334 is referred to (a step 1103) and it is checked whether or not a system monitoring result having the same terminal identifier as the terminal identifier extracted in the step 1102 exists (a step 1104). When the system monitoring result having the same terminal identifier as the extracted terminal identifier exists in the system monitoring result database 334, the processing proceeds to a step 1105 and when no system monitoring result exists, the processing proceeds to a step 1107. It is checked whether or not a system monitoring result associated with the acquired monitoring result among system monitoring results having the same terminal identifier as the extracted terminal identifier exists in the system monitoring result database 334 (the step 1105). When the system monitoring result associated with the extracted monitoring result exists in the system monitoring result database 334, the associated system monitoring result is acquired (a step 1106). The association of a certain monitoring result with another system monitoring result means that one of a process identifier included in the certain monitoring result and a process identifier described in an associated process identifier list coincides with one of a process identifier included in another system monitoring result and a process identifier described in an associated process identifier list.

The communication monitoring result database 335 is referred to (the step 1107) and it is checked whether or not a communication monitoring result having the same terminal identifier as the terminal identifier extracted in the step 1102 exists (a step 1108). When the communication monitoring result having the same terminal identifier as the extracted terminal identifier exists in the communication monitoring result database 335, the processing proceeds to a step 1109 and when no communication monitoring result exists, the processing proceeds to a step 1011. It is checked whether or not a communication monitoring result associated with the acquired monitoring result among communication monitoring results having the same terminal identifier as the extracted terminal identifier exists (the step 1109). When the communication monitoring result associated with the acquired monitoring result exists in the communication monitoring result database 335, the associated communication monitoring result is acquired (a step 1110). The meaning of the association of a certain monitoring result with another communication monitoring result is as described above.

The determination policy is referred to (a step 1111) and it is checked whether policy that meets all the determination conditions exists or not based upon the monitoring result acquired in the step 1101, the system monitoring result acquired in the step 1106 and the communication monitoring result acquired in the step 1110 (a step 1112). To plainly explain an object checked in the step 1112 because the flowchart showing the processing in Fig. 11 is simplified, the object for checking whether the policy that meets all the determination conditions exists or not is the monitoring result acquired in the step 1101 in a case that the system monitoring result associated with the monitoring result acquired in the step 1101 is acquired in the step 1106 and in a case that the communication monitoring result associated with the monitoring result acquired in the step 1101 is acquired in the step 1110. That is, when the monitoring result associated with the monitoring result acquired in the step 1101 already exists in the system monitoring result database 334 or the communication monitoring result database 335, it is checked whether policy that meets all determination conditions exists or not. When no corresponding policy exists, the processing is finished. When the corresponding policy exists, it is determined that an activity by the unauthorized process is performed (a step 1113), the determination result notification unit 338 is called (a step 1114), the monitoring result acquired in the step 1101 is recorded in the system monitoring result database 334 or the communication monitoring result database 335, and the processing is finished.

When the determination result notification unit 338 is called by the unauthorized process determination unit 337, the determination result notification unit 338 notifies the terminal 101 or a communication control unit not shown or an organization that manages the internal network 104 of a message that the unauthorized process is going on in the terminal 101 and the identifier of the process judged unauthorized as warning.

The terminal 101 inhibits the activity of the unauthorized process by stopping the process judged unauthorized and/or taking measures such as blocking the system access and the communication of the process when the terminal receives the warning. Further, applicable measures except the measures against the process itself include the prohibition of the following activation of a file executed by the unauthorized process and the stop of another process, if any, that executes the file executed by the unauthorized process.

When the communication control unit receives the warning, it controls communication of the terminal 101 in which it is judged that the unauthorized process is going on or the communication of the process judged unauthorized among communications by the terminal 101. In this case, the control means the disconnection of communication, the limitation of a band, a change of a path and others. The communication control unit that executes the control may also be connected on a path passing in access from the terminal 101 to the external network 105 or a function as the communication control unit may also be built in the communication monitoring apparatus 102.

When the organization that manages the internal network 104 receives the warning, the organization takes measures to enhance the safety of the whole network such as the transmission of the warning to the terminal 101 in which it is judged that the unauthorized process is going on, the transmission of the warning to terminals connected to the internal network 104 except the terminal 101, and the transmission of the warning to the communication control unit.

In this embodiment, the three of the terminal 101, the communication monitoring apparatus 102 and the unauthorized process determination apparatus 103 are used. However, the terminal 101 or the communication monitoring apparatus 102 may also function as the unauthorized process determination apparatus 103 and the system may also be configured by the two. When the terminal 101 also functions as the unauthorized process determination apparatus 103, the system monitoring result notification unit 315 and the system monitoring result reception unit 332 are not required to be connected via the network and a system monitoring result is directly notified the system monitoring result reception unit 332 from the system monitoring result notification unit 315. Similarly, when the communication monitoring apparatus 102 also functions as the unauthorized process determination apparatus 103, the communication monitoring result notification unit 324 and the communication monitoring result reception unit 333 are not required to be connected via the network and the communication monitoring result reception unit 333 is directly notified of a communication monitoring result from the communication monitoring result notification unit 324.

Further, the terminal 101 may also function as the communication monitoring apparatus 102. In this case, communication as an object monitored by the communication monitoring unit 323 is not communication between the internal network 104 and the external network 105 but communication via the internal network 104 by the terminal 101. Also, in this case, the process information association unit 314 is not required to write a process identifier and an associated process identifier list to an IP packet as in the step 907 shown in Fig. 9, association among the process identifier, the associated process identifier list and communication parameters is held in the memory and the storage device, and the process identifier and the associated process identifier list have only to be ready to be referred to when the communication monitoring unit 323 acquires them in the step 1005 shown in Fig. 10.

In addition, in this embodiment, an identifier of a process that executes an activity and its associated process identifier list are included in information notified by the system monitoring result notification unit 315 and the communication monitoring result notification unit 324. However, no associated process identifier list may be included in notified information. In that case, the unauthorized process determination apparatus 103 is notified of information stored in the process information database 316 from the terminal 101 and an associated process identifier list is acquired at the system monitoring result reception unit 332 and the communication monitoring result reception unit 333 respectively of the unauthorized process determination apparatus 103 based upon the information stored in the process information database 316.

According to this embodiment, it can be detected that an unauthorized process is going on by associating an activity acquired by the monitoring of the system and an activity acquired by the monitoring of communication with a process identifier.

### Second Embodiment

For technique that recently attracts intention, technique called a virtual machine monitor can be given. The virtual machine monitor is software operated in an information processing unit such as a terminal 101 and a virtual machine that can be treated in the similar way to an actual terminal is operated. Since the virtual machine is operated in the virtual machine monitor (under the control of the virtual machine monitor), the virtual machine monitor can monitor a state of the virtual machine operated in the virtual machine monitor by referring to a memory managed by the virtual machine monitor itself.
Some unauthorized processes such as Bot are provided with a function for detecting that monitoring is performed in the terminal and invalidating the monitoring. However, monitoring is never invalidated by monitoring the virtual machine in which an unauthorized process is operated from the outside using the virtual machine monitor.

In this embodiment, an example that a terminal utilized by a user is the virtual machine will be described. This embodiment is different from the first embodiment in the software configuration of the terminal 101. The description of contents common to those of the first embodiment is omitted.

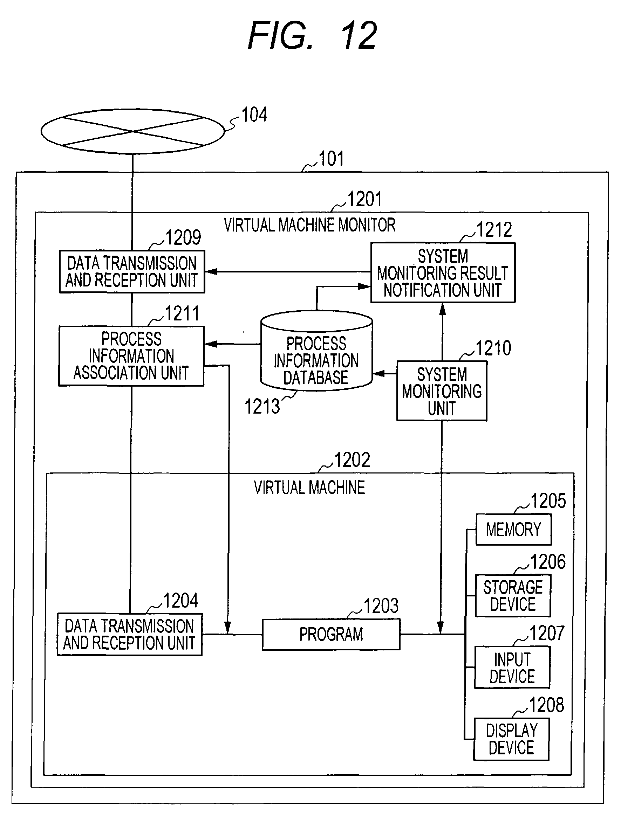

Fig. 12 shows the software configuration of the terminal 101 in this embodiment. The terminal 101 is connected to an internal network 104; in the terminal 101, a virtual machine monitor 1201 is operated, and a virtual machine 1202 is operated in the virtual machine monitor. The hardware configuration of the virtual machine 1202 is similar to that of the terminal 101 in the first embodiment and the virtual machine is provided with an arithmetic unit, a memory, a storage device, a communication device, an input device and a display device (only a part is shown). A process 1203 that acts in the virtual machine 1202 communicates with the internal network 104 via a data transmission and reception unit 1204 and accesses the memory 1205, the storage device 1206, the input device 1207, the display device 1208 and others like the process 312 in the first embodiment. The access is called system access.

In this embodiment, the virtual machine monitor 1201 is provided with a data transmission and reception unit 1209 that transmits/receives data to/from the internal network 104, a system monitoring unit 1210, a process information association unit 1211, a system monitoring result notification unit 1212 and a process information database 1213 in addition to the virtual machine 1202.
The system monitoring unit 1210 monitors the system access of the process 1203 inside the virtual machine 1202 outside the virtual machine 1202. The process information association unit 1211 monitors communication from the virtual machine 1202 to the internal network 104 outside the virtual machine 1202 and associates the process in the virtual machine 1202 with communication parameters of the monitored communication. The system monitoring result notification unit 1212 transmits a monitoring result acquired by the system monitoring unit 1210 to an unauthorized process determination apparatus 103 via the data transmission and reception unit 1209. The process information database 1213 stores an identifier of the process in the virtual machine 1202 and an identifier of a process (a parent process) that generated the process.

Processing by the system monitoring unit 1210 is similar to the processing shown in Fig. 8 by the system monitoring unit 313 in the first embodiment except monitoring system access inside the virtual machine 1202 outside the virtual machine 1202. Similarly, processing by the process information association unit 1211 is the same as the processing shown in Fig. 9 by the process information association unit 314 in the first embodiment except acquiring the information of the process outside the virtual machine 1202. Similarly, the operation of the system monitoring result notification unit 1212 is the same as the operation of the system monitoring result notification unit 315 in the first embodiment and the structure of the process information database 1213 is the same as the structure shown in Fig. 4 of the process information database 316 in the first embodiment.

According to this embodiment, monitoring can be executed without suffering an effect such as the invalidation of security software by an unauthorized process by monitoring the inside of the virtual machine 1202 outside the virtual machine 1202 and a malicious unauthorized process such as an authorized process that counteracts the monitoring of the terminal can also be detected.

### Description of Reference Numerals

100: Unauthorized process detection system, 101: Terminal, 102: Communication monitoring apparatus, 103: Unauthorized process determination apparatus, 104: Internal network, 105: External network, 313: System monitoring unit, 314: Process information association unit, 315: System monitoring result notification unit, 316: Process information database, 323: Communication monitoring unit, 324: Communication monitoring result notification unit, 332: System monitoring result reception unit, 333: Communication monitoring result reception unit, 334: System monitoring result database, 335: Communication monitoring result database, 336: Determination policy, 337: Unauthorized process determination unit, 338: Determination result notification unit.

## Claims

1. An unauthorized process detection method in an unauthorized process detection system for detecting an unauthorized process operated in a terminal connected to a network, comprising steps by the unauthorized process detection system of:
monitoring system access which is access as a result of execution of a process in the terminal to a storage device and an input-output device in the terminal;
associating a first activity which is acquired by the monitoring of the system access and which is processing of the process with the process that executes the first activity and recording them in a system monitoring result database;
monitoring communication via the network as a result of the execution of the process in the terminal;
associating a second activity which is acquired by the monitoring of the communication and which is processing of the process with the process that executes the second activity and recording them in a communication monitoring result database;
determining whether an activity which is the same as at least one of the first and second activities and a process that executes which is the same process or its associated process is already recorded in the system monitoring result database or in the communication monitoring result database; and
determining that the process that executed is an unauthorized process when the activity judged to be recorded meets predetermined conditions.

2. The unauthorized process detection method according to Claim 1,
wherein the process associated with the process that executed the activity means that there exists a process common to a first process list acquired by recursively pursuing a first process which is the process that executed the activity and a parent process that generated the first process and a second process list acquired by recursively pursuing a second process which is the associated process and a parent process that generated the second process.

3. The unauthorized process detection method according to Claim 1,
wherein the terminal writes information showing the process that executed communication to an IP packet of communication via the network;
the unauthorized process detection system extracts the information of the process written to the IP packet corresponding to the second activity in the monitoring of the communication; and
the unauthorized process determination system sets the process shown by the extracted information as a process that executed the second activity.

4. The unauthorized process detection method according to Claim 1,
wherein the unauthorized process detection system outputs warning according to determination that the process that executed the activity in the terminal is an unauthorized process.

5. The unauthorized process detection method according to Claim 1,
wherein when the terminal is a virtual machine, a virtual machine monitor that controls the virtual machine monitors the system access in the virtual machine; and
the virtual machine monitor associates the first activity in the virtual machine with the information of a process that executes the first activity.

6. An unauthorized process detection system in a network to which a terminal, a communication monitoring apparatus and an unauthorized process determination apparatus are connected, comprising:
a terminal that monitors system access which is access as a result of the execution of a process to a storage device and an input-output device, that associates a first activity which is acquired by the monitoring of the system access and which is the processing of the process with the process that executed the first activity and notifies them as an access monitoring result, and that writes information showing the process that executed the communication to communication via the network;
a communication monitoring apparatus which is connected to the terminal via the network, extracts information included in the communication via the network and showing the process, monitors the communication, associates a second activity acquired by the monitoring of the communication with the extracted process, and notifies them as a communication monitoring result; and
an unauthorized process determination apparatus which is connected to the terminal and the communication monitoring apparatus, is provided with databases that record the access monitoring result notified from the terminal and the communication monitoring result notified from the communication monitoring apparatus, and determines that an unauthorized process is going on in the terminal when the first or second activity included in the access monitoring result or in the communication monitoring apparatus meets predetermined conditions and the first or the second activity is already recorded in the database as an activity executed by the same process or an associated process as/with the process associated with the first or second activity.

7. The unauthorized process detection system according to Claim 6,
wherein the terminal records information showing parent-child relationship of the process, notifies a process list acquired by recursively pursuing the process and a parent process based upon the process together in the notification of the access monitoring result, and further communicates the process list acquired by recursively pursuing the parent process from the process together in the communication to the communication monitoring apparatus; and
the communication monitoring apparatus further notifies of the process list in the notification of the communication monitoring result.

8. The unauthorized process detection system according to Claim 6,
wherein the process associated with the process that executed the activity means that there exists a process common to a first process list acquired by recursively pursuing a first process which is the process that executed the activity and a parent process that generated the first process and a second process list acquired by recursively pursuing a second process which is the associated process and a parent process that generated the second process.

9. The unauthorized process detection system according to Claim 6,
wherein the terminal writes an identifier of the process as information showing the process to an IP packet of communication via the network.

10. The unauthorized process detection system according to Claim 6,
wherein the unauthorized process determination apparatus outputs warning according to determination that an unauthorized process is going on in the terminal.

11. The unauthorized process detection system according to Claim 6,
wherein when the terminal is a virtual machine, the virtual machine executes a process, monitors the system access inside the terminal, associates a first activity acquired by the monitoring of the access with the process that executed the first activity, notifies the unauthorized process determination apparatus of them, and writes information showing the process that executed communication to communication via the network executed by the terminal; and
a virtual machine monitor that controls the virtual machine is provided.
